(19)

Europäisches
Patentamt

European
Patent Office

Office européen
des brevets

(11) **EP 4 763 643 A1**

(12) **EUROPEAN PATENT APPLICATION**

(43) Date of publication:
**24.06.2026  Bulletin 2026/26**

(21) Application number: **25214200.5**

(22) Date of filing: **07.11.2025**

(51) International Patent Classification (IPC):
**B60W 30/09** *(2012.01)*

(52) Cooperative Patent Classification (CPC):
**B60W 30/09;** B60W 2554/4029; B60W 2554/4041;
B60W 2554/801; B60W 2554/802

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.12.2024  JP 2024221637**

(71) Applicant: **AISIN CORPORATION**
**Aichi 448-8650 (JP)**

(72) Inventor: **UKAI, Yuichi**
**Kariya, 448-8650 (JP)**

(74) Representative: **TBK**
**Bavariaring 4-6**
**80336 München (DE)**

(54) **DRIVING ASSISTANCE DEVICE**

(57)     Provided is a driving assistance device in which: object detection processing of detecting a position and a type of an object (15) around a vehicle (2) is performed; a vehicle-occupied area (41, 42) that indicates an area occupied by the vehicle (2) with respect to a position of the vehicle (2) and has different shapes according to the type of the object is disposed on a map (45); the position of the object (15) is specified on the map; a positional relationship between the vehicle-occupied area (41, 42) and the object (15) on the map is specified; and driving assistance of the vehicle (2) relative to the object (15) is performed when the positional relationship satisfies a predetermined assistance start condition.

*FIG. 15*

RELATED ART

51

LONG

41

DISTANCE TO PEDESTRIAN IS LARGER THAN PREDETERMINED
DISTANCE ⇒ ASSISTANCE CANNOT BE STARTED

EMBODIMENT

51

SHORT

42

DISTANCE TO PEDESTRIAN IS EQUAL TO OR LESS THAN
PREDETERMINED DISTANCE ⇒ ASSISTANCE CAN BE STARTED

EP 4 763 643 A1

## Description

TECHNICAL FIELD

This disclosure relates to a driving assistance device that assists driving of a vehicle.

BACKGROUND DISCUSSION

In the related art, as a safety device for ensuring safety during traveling or parking of a vehicle, a technique is known in which a detection sensor for detecting a surrounding object (for example, a person, a bicycle, other vehicles, and a wall) such as an ultrasonic sensor, a millimeter wave radar sensor, or a LiDAR sensor is disposed on the vehicle, and a warning is given to a driver or automatic control of the vehicle is performed based on a detection result of the detection sensor.

Such a detection sensor outputs a probe wave, such as an ultrasonic wave, a millimeter wave, or an infrared ray, measures a time until the output probe wave is reflected by the object and returns, and detects a distance to the object. When a plurality of detection sensors are disposed on the vehicle, it is also possible to specify a specific position of the object by triangulation using an indirect wave in addition to a direct wave. For example, JP 2022-7365A discloses a technique in which, when there is an obstacle in a traveling direction of a vehicle, brake control is started at a timing when a distance from a position of a portion of the vehicle closest to the obstacle to the obstacle is D2, and the vehicle is stopped at a position where the distance from the position of the portion of the vehicle closest to the obstacle to the obstacle is D3.

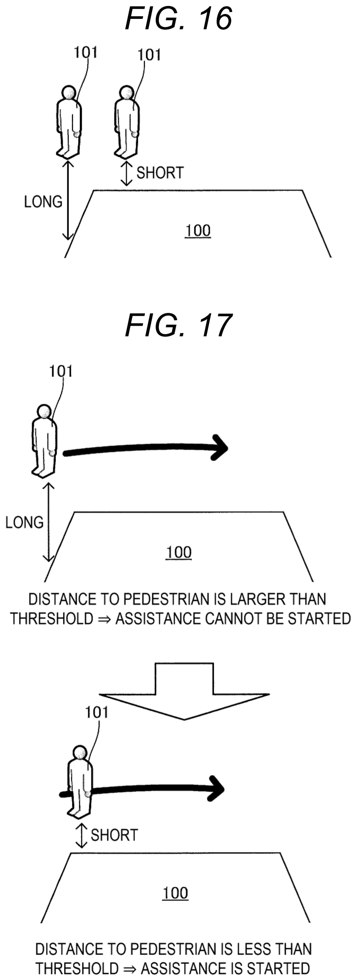

Here, when various types of driving assistance, such as the brake control for the obstacle, are performed as disclosed in JP 2022-7365A (paragraphs 0037 to 0043) (Reference 1), a distance from the vehicle to the obstacle, which is a start condition of the driving assistance, is measured according to a vehicle shape as much as possible to prevent an excessive operation. Therefore, as illustrated in Fig. 16, when a pedestrian 101 is present in front of a vehicle 100 (the same applies to the rear), although the pedestrian 101 is present at a position where the distance from the vehicle 100 does not substantially change near a center and near left and right ends of the vehicle 100, the distance from the vehicle 100 to the pedestrian 101 is measured to be significantly different. As a result, particularly as illustrated in Fig. 17, when the pedestrian 101 crosses right and left in front of or behind the vehicle 100, the distance from the vehicle 100 to the pedestrian 101 is larger than a threshold serving as an assistance start condition at a stage where the pedestrian 101 is located near the right and left ends of the vehicle 100. Therefore, the assistance for the pedestrian 101 may not be performed, and the start of the assistance for the pedestrian 101 may be delayed. In particular, when the vehicle 100 turns in addition to the movement of the pedestrian 101, a speed of change in a relative position of the pedestrian 101 with respect to the vehicle 100 increases, and the start of assistance is delayed, which is a major problem.

A need thus exists for a driving assistance device capable of executing driving assistance of a vehicle at an appropriate timing according to a type of an object to be assisted by setting a vehicle-occupied area as a reference for calculating a distance from the vehicle to the object to a shape according to a type of the object.

SUMMARY

According to an aspect of this disclosure, there is provided a driving assistance device, in which: object detection processing of detecting a position and a type of an object around a vehicle is performed; a vehicle-occupied area that indicates an area occupied by the vehicle with respect to a position of the vehicle and has different shapes according to the type of the object is disposed on a map; the position of the object is specified on the map; a positional relationship between the vehicle-occupied area and the object on the map is specified; and driving assistance of the vehicle relative to the object is performed when the positional relationship satisfies a predetermined assistance start condition.

The phrase "a vehicle-occupied area that has different shapes according to the type of the object is disposed on a map" may mean that vehicle-occupied areas that have different shapes may be disposed for each type of object, or vehicle-occupied areas that have different shapes may be disposed only when the type of object is a specific type.

The terms "different shapes" include a case where the outer shapes are the same and the sizes are different.

Examples of the "driving assistance of the vehicle" include giving a warning to an object to be assisted and performing vehicle control in accordance with approaching of the object to be assisted.

According to the driving assistance device of this disclosure having the above configuration, the vehicle-occupied area serving as a reference for calculating the distance from the vehicle to the object to be assisted has a shape corresponding to the type of the object, and therefore, it is possible to execute driving assistance of the vehicle at an appropriate timing according to the type of the object.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic configuration diagram of a vehicle according to the present embodiment;

Fig. 2 is a diagram illustrating an arrangement example of ultrasonic sensors in a front surface of the vehicle;

Fig. 3 is a diagram illustrating an arrangement example of ultrasonic sensors in a side surface of the vehicle;

Fig. 4 is a diagram illustrating a method for specifying a specific position (a relative position with respect to the vehicle) of an object using triangulation;

Fig. 5 is a block diagram illustrating a configuration of a driving assistance device according to the present embodiment;

Fig. 6 is a diagram illustrating a reference vehicle-occupied area;

Fig. 7 is a diagram illustrating a pedestrian vehicle-occupied area;

Fig. 8 is a flowchart of a probe wave detection processing program according to the present embodiment;

Fig. 9 is a flowchart of an image detection processing program according to the present embodiment;

Fig. 10 is a flowchart of a driving assistance processing program according to the present embodiment;

Fig. 11 is a diagram illustrating a method for calculating the pedestrian vehicle-occupied area and a collision linear distance disposed on a map;

Fig. 12 is a diagram illustrating a method for calculating the reference vehicle-occupied area and the collision linear distance disposed on the map;

Fig. 13 is a diagram illustrating the same-object determination;

Fig. 14 is a diagram illustrating a method for calculating the collision linear distance;

Fig. 15 is a diagram illustrating a timing at which assistance for a pedestrian can be started in comparison with the related art;

Fig. 16 is a diagram illustrating a problem of the related art; and

Fig. 17 is a diagram illustrating a problem of the related art.

DETAILED DESCRIPTION

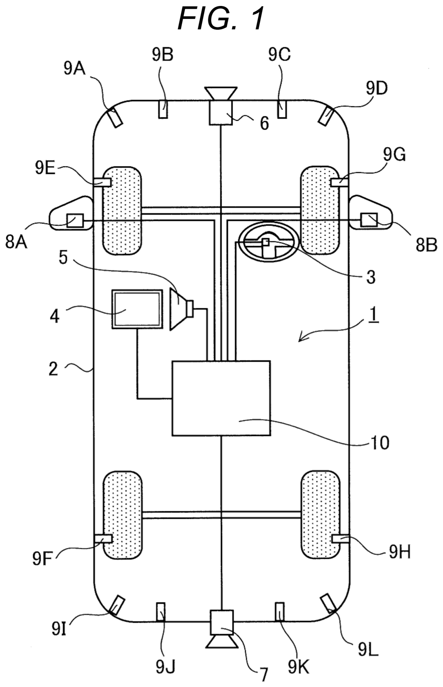

Hereinafter, a driving assistance device disclosed here will be described in detail with reference to the drawings. First, a vehicle 2 equipped with a driving assistance device 1 according to the present embodiment will be described below. Fig. 1 is a schematic configuration diagram of the vehicle 2 according to the present embodiment.

Here, the vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. Regardless of a type of the vehicle, the vehicle 2 may be an ordinary vehicle, a large truck for commercial use, a bus, construction machinery, or the like. In the following description, a four-wheeled vehicle is used, and a two-wheeled or three-wheeled vehicle may be used.

The vehicle 2 may be a vehicle capable of manual driving traveling in which the vehicle travels based on a driving operation of a user, as well as assisted traveling using autonomous driving assistance in which the vehicle travels automatically without the driving operation of the user. In contrast, the vehicle 2 may be a vehicle that can only perform assisted traveling by the autonomous driving assistance. On the other hand, the vehicle 2 is not necessarily limited to a vehicle that can perform assisted traveling by the autonomous driving assistance, and may be a vehicle that can travel only by manual driving. However, even when the vehicle can travel only by manual driving, when objects such as a pedestrian or other vehicles approach the vehicle as described later, the vehicle can perform warning or deceleration control with the objects as a target.

When the vehicle is a vehicle that can perform assisted traveling by the autonomous driving assistance, the autonomous driving assistance may be performed only under a specific situation such as when parking or leaving a garage, may be performed for all road sections, or may be performed only while the vehicle travels on a specific road section (for example, a highway with a gate (manned or unmanned, paid or free) at a boundary).

In vehicle control in the autonomous driving assistance, for example, a current position of the vehicle, a lane in which the vehicle travels, and positions of surrounding obstacles are detected at any time, and the vehicle control of a steering, a drive source, a brake, and the like is automatically performed such that the vehicle travels along a generated travel trajectory at a speed according to a speed plan generated in the same manner. In particular, when parking assistance is performed, the vehicle control is automatically performed in which a parking space, which is a target into which the vehicle is to be parked, and a surrounding situation are confirmed using a detection result of a sensor or a camera, a parking trajectory to the parking space is calculated, the vehicle enters the parking space along the calculated parking trajectory, and the parking is completed. However, only a steering operation may be automatically performed, and the drive source and the brake may be controlled based on a manual operation. Alternatively, only guidance into the parking space may be performed, and a parking operation in the parking space may be manually performed by the user.

In the present embodiment, when an object such as a pedestrian or other vehicles approaches the vehicle, driving assistance such as warning or deceleration control is performed with the object as a target regardless of whether the vehicle is traveling by the autonomous driving assistance or traveling by manual driving. Basically, the type of object is not limited, and the driving assistance is performed even for a stationary object, such as a utility pole, a wall, or a step, in addition to a moving object such as a pedestrian, a bicycle, or other vehicles. In particular, under a specific condition, accuracy of the driving assistance is improved by performing same-object determination by using both probe wave detection processing and image detection processing as described later.

For example, when issuing a warning, a warning sound may be output, or a scene around the vehicle (which may be an actual scene or a virtual CG scene) may be displayed on an in-vehicle display, and a warning image indicating the presence of an object may be superimposed and displayed in the scene. On the other hand, when the deceleration control is performed, a brake is automatically operated when the object is detected within a distance set according to a current speed of the vehicle. When the autonomous driving assistance is being executed, it is also possible to stop the vehicle by performing the deceleration control and interrupting the autonomous driving assistance.

As illustrated in Fig. 1, the vehicle 2 includes an operation unit 3 that receives an operation from an occupant, a liquid crystal display 4 that displays an image of the surroundings of the vehicle and other information related to driving assistance to the occupant, a speaker 5 that outputs audio guidance related to the driving assistance, a front camera 6, a rear camera 7, and side cameras 8A and 8B that capture images of the surroundings of the vehicle, ultrasonic sensors 9A to 9L that are a type of detection sensor that detects obstacles around the vehicle, and a driving assistance electronic control unit (ECU) 10 that performs various types of arithmetic processing based on received information. The driving assistance device 1 includes the driving assistance ECU 10.

Hereinafter, the components included in the vehicle 2 will be described. First, the operation unit 3 is disposed, for example, on a front surface of a steering wheel and includes operation buttons that are operated when the autonomous driving assistance is started. By operating the operation unit 3, the user can switch between the manual driving traveling in which the vehicle travels based on the driving operation of the user and the assisted traveling by the autonomous driving assistance in which the vehicle automatically travels without the driving operation of the user. The operation unit 3 may include a touch panel provided on a front surface of the liquid crystal display 4. A microphone and a voice recognition device may be further included.

The liquid crystal display 4 is a type of display device, is provided on an instrument panel of the vehicle 2, and displays, for example, a map image around the host vehicle, captured images which are captured by cameras including the front camera 6, the rear camera 7, and the side cameras 8A and 8B, and a bird's-eye view image or an overhead image of the surroundings of the vehicle generated by performing viewpoint conversion and synthesis processing on the captured images. When an object, such as a pedestrian or other vehicles, approaches the vehicle, a warning image indicating the presence of the object is also displayed. The liquid crystal display 4 may also be used in a navigation device.

The speaker 5 is provided on the instrument panel of the vehicle 2 and outputs a guidance voice, a warning sound, or the like related to the driving assistance. In particular, when an object, such as a pedestrian or other vehicles, approaches the vehicle, the warning sound for the object is output in a mode enabling a direction in which the object is located to be known. The speaker 5 may also be used in the navigation device.

The front camera 6 is, for example, an image-capturing device including a camera using a solid-state imaging element such as a CCD and is provided, for example, above a front bumper of the vehicle 2 or on a back side of a rear-view mirror with an optical axis direction thereof being directed to the front in a traveling direction of the vehicle.

The rear camera 7 is also an image-capturing device including a camera using a solid-state imaging element such as a CCD and is provided, for example, in the vicinity of an upper center of a license plate attached to the rear of the vehicle 2 with an optical axis direction thereof being directed to the rear of the vehicle.

The side cameras 8A and 8B are also image-capturing devices each including a camera using a solid-state imaging element such as a CCD, and are attached to, for example, left and right side mirrors of the vehicle 2 with optical axis directions thereof being directed to lateral sides of the vehicle.

The driving assistance ECU 10 detects the object (division lines, other vehicles, pedestrians, bicycles, walls, guardrails, and other structures) around the vehicle by performing image recognition processing on the captured images captured by the cameras including the front camera 6, the rear camera 7, and the side cameras 8A and 8B. The detected object is used for autonomous driving assistance, and is used for the same-object determination (S13) to be described later, particularly when a position of the object is specified. The detected object can also be used to specify the position of an object to be assisted together with the ultrasonic sensors 9A to 9L to be described later. The captured images captured by the cameras including the front camera 6, the rear camera 7, and the side cameras 8A and 8B, and the bird's-eye view image or the overhead image of the surroundings of the vehicle generated by performing the viewpoint conversion and the synthesis processing on the captured images are also displayed on the liquid crystal display 4.

The ultrasonic sensors 9A to 9L are disposed at predetermined intervals on a front portion, a rear portion, and side portions of the vehicle, and transmit ultrasonic waves as probe waves to the surroundings of the vehicle 2 and receive reflected waves of the transmitted probe waves reflected by objects around the vehicle, thereby detecting the objects that reflect the probe waves. Specifically, the ultrasonic sensors 9A to 9L are of a type of distance measurement sensor that can detect a distance (distance measurement value) to the object that reflects the probe wave by measuring a time from the transmission to the reception. The ultrasonic sensors 9A to 9L can generate an output signal (including the distance to the detected object) corresponding to a reception result of the received wave and output the output signal to a control unit. Examples of an object serving as a detection target by the ultrasonic sensors 9A to 9L include an obstacle that needs to be avoided when the vehicle 2 travels, such as a person, a bicycle, other vehicles, and a wall, and steps and the like. As the distance measurement sensor, a millimeter wave sensor or a radar sensor may be used instead of the ultrasonic sensor.

Installation positions and installation directions of the respective ultrasonic sensors 9A to 9L can be set appropriately. In the present embodiment, to set a detection range of the object to all orientations including the front, rear, and left and right directions of the traveling direction of the vehicle 2, the ultrasonic sensors 9A to 9D are provided on a front side of the vehicle 2 being directed to the traveling direction such that a transmission direction of the probe wave is forward in the traveling direction of the vehicle. The ultrasonic sensors 9E and 9F are provided on a left side surface of the vehicle 2 being directed to a left side in the traveling direction such that the transmission direction of the probe wave is leftward in the traveling direction of the vehicle. The ultrasonic sensors 9G and 9H are provided on a right side surface of the vehicle 2 being directed to a right side in the traveling direction such that the transmission direction of the probe wave is rightward in the traveling direction of the vehicle. The ultrasonic sensors 9I to 9L are provided on a rear surface of the vehicle 2 being directed to a direction opposite to the traveling direction such that the transmission direction of the probe wave is toward the rear of the vehicle. The ultrasonic sensors 9A to 9L have substantially the same height from a ground surface.

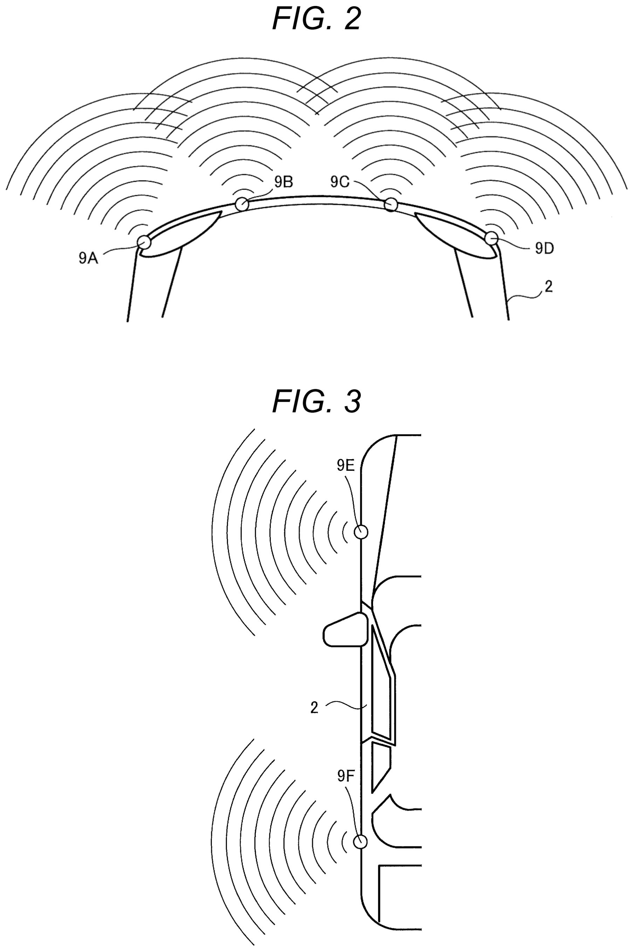

In particular, when the ultrasonic sensors 9A to 9D are described as an example, as illustrated in Fig. 2, it is desirable that the ultrasonic sensors 9A to 9D are provided at different positions around the front bumper on the front surface of the vehicle 2 or a front grille above the front bumper at equal intervals without deviation in a left-right direction, and can transmit the probe wave to a wider range in front of the vehicle (that is, the detectable range of the object is set as the wider range).

Specifically, as illustrated in Fig. 2, the ultrasonic sensor 9A is provided in the vicinity of a left front corner of the vehicle 2 in an orientation in which the transmission direction of the probe wave is inclined slightly to the left direction from the traveling direction of the vehicle 2 to transmit the probe wave to the left front of the vehicle 2. The ultrasonic sensor 9B is provided slightly to the left of a center line of the vehicle 2 in a direction in which the transmission direction of the probe wave is directed to the traveling direction of the vehicle to transmit the probe wave in front of the vehicle 2, particularly on the left side. The ultrasonic sensor 9C is provided slightly to the right of the center line of the vehicle 2 in a direction in which the transmission direction of the probe wave is directed to the traveling direction of the vehicle to transmit the probe wave in front of the vehicle 2, particularly on the right side. The ultrasonic sensor 9D is provided in the vicinity of a right front corner of the vehicle 2 in an orientation in which the transmission direction of the probe wave is inclined slightly to the right direction from the traveling direction of the vehicle 2 to transmit the probe wave to the right front of the vehicle 2. The ultrasonic sensor 9A and the ultrasonic sensor 9D, and the ultrasonic sensor 9B and the ultrasonic sensor 9C are disposed symmetrically with respect to the vehicle center line in a plan view. Although not illustrated, the same applies to the ultrasonic sensors 9I to 9L on the rear surface of the vehicle 2 in a vertically symmetrical manner.

In contrast, as illustrated in Fig. 3, the ultrasonic sensor 9E and the ultrasonic sensor 9F on the side are provided to transmit the probe wave in a direction intersecting the traveling direction of the vehicle 2 by 90 degrees. As described above, since the number of sensors provided on the side range is less than that on the front side or the rear side of the vehicle, there are areas in which the object cannot be directly detected by the ultrasonic sensors 9E and 9F. However, in these areas, the presence or absence of the object and the position of the object can be estimated from a detection history of the object by the ultrasonic sensors 9A to 9L. Although not illustrated, the same applies to the ultrasonic sensor 9G and the ultrasonic sensor 9H on the right side surface of the vehicle 2 in a horizontally symmetrical manner.

In the present embodiment, among the ultrasonic sensors 9A to 9L, in particular, the ultrasonic sensors 9A to 9D on the front surface of the vehicle 2 and the ultrasonic sensors 9I to 9L on the rear surface of the vehicle 2 are provided at positions at which reflected waves can be received as indirect waves between adjacent sensors. Therefore, it is possible to determine not only the distance to the object but also a specific position (a relative position with respect to the vehicle) of the object using triangulation by receiving direct waves and indirect waves as received waves. Although the ultrasonic sensors 9E to 9H on the lateral sides cannot receive indirect waves because they are provided apart from one another, the specific position (a relative position with respect to the vehicle) of the object can be specified by triangulation using a measured distance of a previous position, a measured distance of a current position, and a movement distance therebetween as the vehicle moves.

Hereinafter, in particular, the ultrasonic sensors 9A to 9D disposed on the front surface of the vehicle 2 will be described in more detail including the detection mode of the object.

Here, among the ultrasonic sensors 9A to 9D, the ultrasonic sensor 9A and the ultrasonic sensor 9B have a positional relationship in which at least the received waves can be received from each other. That is, the ultrasonic sensor 9B is in a positional relationship in which the probe wave transmitted from the ultrasonic sensor 9A can be received as the indirect wave. Similarly, the ultrasonic sensor 9A is a positional relationship in which the probe wave transmitted from the ultrasonic sensor 9B can be received as the indirect wave. The ultrasonic sensor 9B and the ultrasonic sensor 9C are also in a positional relationship in which received waves can be received from each other. That is, the ultrasonic sensor 9C is in a positional relationship in which the probe wave transmitted from the ultrasonic sensor 9B can be received as the indirect wave. Similarly, the ultrasonic sensor 9B is in a positional relationship in which the probe wave transmitted from the ultrasonic sensor 9C can be received as the indirect wave. The ultrasonic sensor 9C and the ultrasonic sensor 9D are also in a positional relationship in which received waves can be received from each other. That is, the ultrasonic sensor 9D is in a positional relationship in which the probe wave transmitted from the ultrasonic sensor 9C can be received as the indirect wave. Similarly, the ultrasonic sensor 9C is in a positional relationship in which the probe wave transmitted from the ultrasonic sensor 9D can be received as the indirect wave.

On the other hand, combinations of ultrasonic sensors other than the above are basically in a positional relationship in which received waves cannot be received from each other, and for example, the ultrasonic sensor 9C and the ultrasonic sensor 9D are in a positional relationship in which the probe wave transmitted from the ultrasonic sensor 9A cannot be received as the indirect wave. The ultrasonic sensor 9D is in a positional relationship in which the probe wave transmitted from the ultrasonic sensor 9B cannot be received as the indirect wave. The ultrasonic sensor 9A is in a positional relationship in which the probe wave transmitted from the ultrasonic sensor 9C cannot be received as the indirect wave. The ultrasonic sensor 9A and the ultrasonic sensor 9B are in a positional relationship in which the probe wave transmitted from the ultrasonic sensor 9D cannot be received as the indirect wave.

The expression "the received wave can be received" means that the received wave can be received to the extent that the distance to the object can be effectively detected. In contrast, the expression "the received wave cannot be received" includes not only the inability to receive any received wave, but also the reception at a weak reception strength to the extent that the distance to the object cannot be effectively detected.

In the present embodiment, the ultrasonic sensors 9A to 9D can specify not only the distance to the object but also the specific position of the object (a relative position with respect to the vehicle) by receiving the direct wave and the indirect wave as the received waves. The "direct wave" and the "indirect wave" are defined as follows. For example, among the received waves received by the ultrasonic sensor 9A, a received wave caused by a reflected wave of the probe wave transmitted from the ultrasonic sensor 9A from the object is referred to as a "direct wave". The direct wave is a received wave when the ultrasonic sensor 9A receives, as the received wave, the reflected wave from the object of the probe wave transmitted from the ultrasonic sensor 9A. That is, the direct wave is a received wave when an ultrasonic sensor that transmits a probe wave and an ultrasonic sensor that receives a reflected wave of the probe wave from the object as a received wave are the same. In contrast, among the received waves received by the ultrasonic sensor 9A, a received wave caused by a reflected wave from the object of a probe wave transmitted from an ultrasonic sensor (the ultrasonic sensor 9B in the present embodiment) other than the ultrasonic sensor 9A is referred to as an "indirect wave". The indirect wave is a received wave when the ultrasonic sensor 9A receives, as the received wave, a reflected wave from the object of the probe wave transmitted from the ultrasonic sensor 9B. That is, the indirect wave refers to a received wave when an ultrasonic sensor that transmits a probe wave is different from an ultrasonic sensor that receives a reflected wave of the probe wave from the object as the received wave.

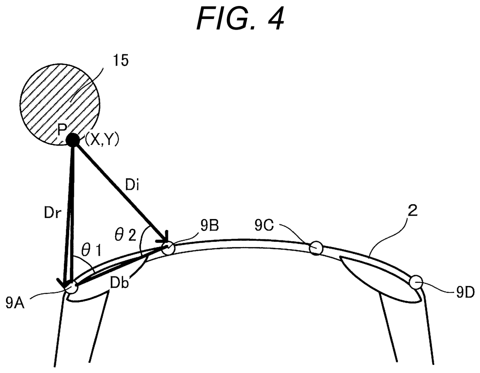

As a method for specifying a specific position (a relative position with respect to the vehicle) of an object 15 when the object 15 is present in front of the vehicle as illustrated in Fig. 4, a case in which a position P (X, Y) of the object 15 is specified by the probe wave transmitted from the ultrasonic sensor 9A will be described. First, the ultrasonic sensor 9A transmits the probe wave and receives the direct wave which is a reflected wave reflected by the object 15 to measure a distance Dr from the ultrasonic sensor 9A to the position P. The ultrasonic sensor 9B receives, as the indirect wave, the reflected wave reflected by the object of the probe wave transmitted from the ultrasonic sensor 9A to measure a sum of the distance Dr from the ultrasonic sensor 9A to the position P and a distance Di from the ultrasonic sensor 9B to the position P. A distance Db between the ultrasonic sensor 9A and the ultrasonic sensor 9B is a fixed value for each vehicle, and can be acquired by inputting the distance Dd to a device side in advance. As a result, based on lengths of the three sides Dr, Di, and Db, angles $\theta 1$ and $\theta 2$ therebetween can be calculated, and specific position coordinates (X, Y) (a relative position with respect to the vehicle) of the position P of the object 15 can also be specified using triangulation. In the above example, the case in which the position P (X, Y) of the object 15 is specified by the probe wave transmitted from the ultrasonic sensor 9A has been described, but the position P (X, Y) of the object 15 can be similarly specified by a probe wave transmitted from another ultrasonic sensor (for example, the ultrasonic sensor 9B) at a position at which the probe wave reaches the object 15.

However, as illustrated in Fig. 4, in the detection of the object using triangulation, it is possible to detect a specific position of the object, but the detection accuracy generally decreases as the distance from the ultrasonic sensors 9A to 9L increases. Since the pedestrian wears a material, such as cloth, that hardly reflects the probe wave on the surface, a detection error is likely to occur. Meanwhile, in the detection of the position of the object by the cameras including the front camera 6, the rear camera 7, and the side cameras 8A and 8B, a detection error is likely to occur due to image distortion. Therefore, in the present embodiment, to perform assistance with high accuracy, instead of detecting the object by the ultrasonic sensors 9A to 9L alone or the camera alone, a detection result of the object by the ultrasonic sensors 9A to 9L is combined with an image recognition result for the captured images captured by the cameras provided in the vehicle. Specifically, in parallel with the above-described specify processing on the position of the object by triangulation (hereinafter referred to as probe wave detection processing) (an execution interval may be different), identification processing (hereinafter referred to as image detection processing) on the position of the object by performing the image recognition processing on the captured images captured by the cameras including the front camera 6, the rear camera 7, and the side cameras 8A and 8B is also performed. Then, in the driving assistance device 1 according to the present embodiment, on a condition that the object whose position is specified by the probe wave detection processing and the object whose position is specified by the image detection processing are regarded as the same object, the objects regarded as the same object is recognized as an object to be assisted for which driving assistance of the vehicle is performed. The determination of whether the objects are the same is hereinafter referred to as the same-object determination, and the object for which the same-object determination is established is hereinafter referred to as the same determination object.

The same-object determination may be performed only on a pedestrian who is an object requiring particular attention for the vehicle, and for an object other than a pedestrian, the object may be detected by the ultrasonic sensors 9A to 9L alone or the cameras alone, as in the related art.

The driving assistance ECU 10 is an electronic control unit that performs various types of processing related to the autonomous driving assistance. The above-described probe wave detection processing and the image detection processing are performed at a predetermined processing interval, and in particular, the same-object determination is performed for a pedestrian. When an object, such as a pedestrian or other vehicles recognized as the object to be assisted, approaches the vehicle, a warning or deceleration control is performed on the object. When performing the autonomous driving assistance, for example, a current position of the vehicle, a lane in which the vehicle travels, and positions of surrounding obstacles are detected at any time, and vehicle control of a steering wheel, a drive source, and a brake is performed such that the vehicle travels along a generated travel trajectory at a speed according to a similarly generated speed plan. The driving assistance ECU 10 is connected to the operation unit 3, the liquid crystal display 4, the speaker 5, the front camera 6, the rear camera 7, the side cameras 8A and 8B, and the ultrasonic sensors 9A to 9L described above via an in-vehicle network such as a CAN. The driving assistance ECU 10 is also connected to various sensors such as a speed sensor, an acceleration sensor, a gyro sensor, a steering sensor, and a shift position sensor mounted on the vehicle 2, a navigation device as an in-vehicle device, and the like. A detailed configuration of the driving assistance ECU 10 will be described later.

In addition to the components illustrated in Fig. 1, the vehicle 2 includes basic components as the vehicle 2. However, only a configuration related to the detection of the object and assistance for the detected object, and control related to the configuration will be described.

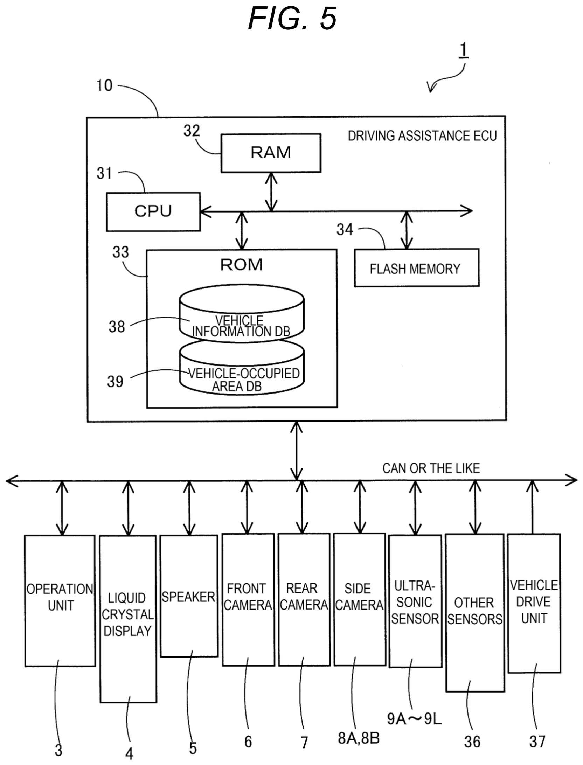

Next, the driving assistance ECU 10 of the driving assistance device 1 included in the vehicle 2 will be described in detail. Fig. 5 is a block diagram illustrating a configuration of the driving assistance device 1 according to the present embodiment.

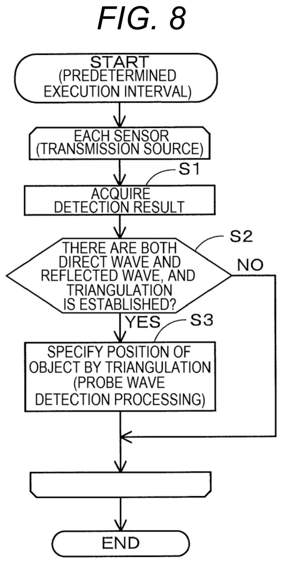

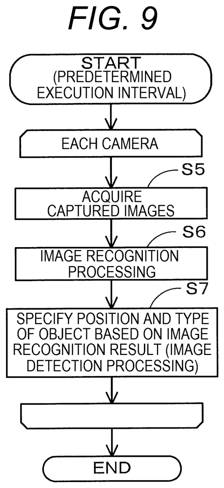

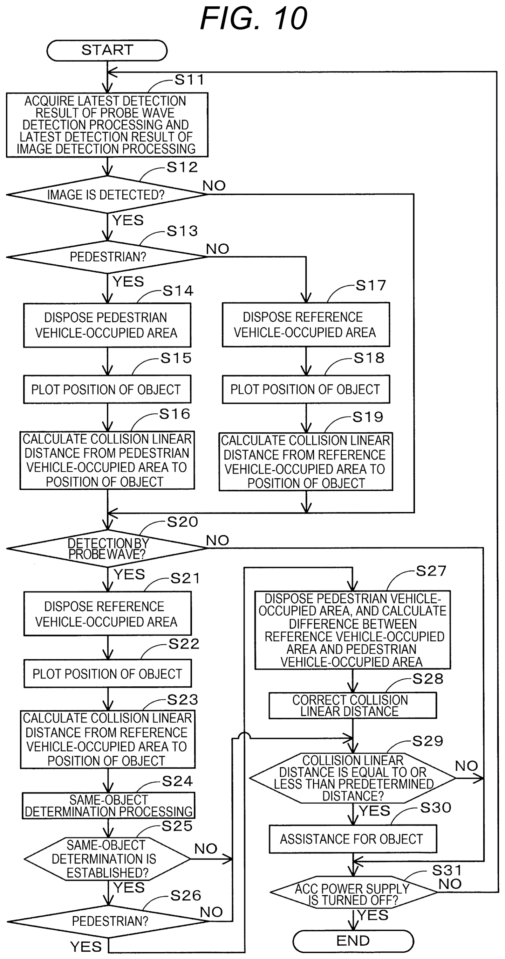

As illustrated in Fig. 5, the driving assistance electronic control unit (ECU) 10 is an electronic control unit that performs overall control of the driving assistance device 1, and includes a CPU 31 serving as an arithmetic device and a control device, and internal storage devices such as a RAM 32 that is used as a working memory when the CPU 31 performs various types of arithmetic processing and that stores a history of detection coordinates when the object is detected, a ROM 33 that stores a control program, a probe wave detection processing program (see Fig. 8), an image detection processing program (see Fig. 9), a driving assistance processing program (see Fig. 10), and the like, and a flash memory 34 that stores a program read from the ROM 33. The driving assistance ECU 10 executes various functions as processing algorithms. Examples of the functions include a function of detecting a position and a type of an object around the vehicle, a function of disposing, on a map, a vehicle-occupied area that indicates an area occupied by the vehicle with respect to the position of the vehicle and has different shapes according to the type of the object, a function of specifying the position of the object on the map, a function of specifying a positional relationship between the vehicle-occupied area and the object on the map, and a function of performing driving assistance of the vehicle relative to the object when the positional relationship satisfies a predetermined assistance start condition.

The driving assistance ECU 10 is also connected to various sensors 36 for detecting behaviors of the vehicle, such as a vehicle speed sensor, a wheel speed sensor, an acceleration sensor, a gyro sensor, a steering sensor, and a shift position sensor, and a drive unit 37 of the vehicle, such as a steering wheel, a brake, an accelerator, and a transmission. A current behavior of the vehicle is detected based on detection results of these sensors 36, and deceleration control and autonomous driving assistance on the vehicle 2 is performed by controlling the drive unit 37. As a specific content of the deceleration control, for example, if it is determined that the object is located within a distance set based on the current speed of the vehicle (basically, set to be longer and shorter as the speed of the vehicle is higher and lower), control of automatically operating the brake and decelerating the vehicle is performed. In particular, when the autonomous driving assistance is being executed, the deceleration control is performed, and control of interrupting the autonomous driving assistance to stop the vehicle is also performed. The deceleration control includes control of reducing acceleration in addition to active deceleration control by operating the brake. However, the deceleration control may be performed by only an instruction to the occupant, and the brake control may be performed based on a manual operation of the occupant.

The ROM 33 includes a vehicle information DB 38 and a vehicle-occupied area DB 39. The vehicle information DB 38 stores various types of information related to the vehicle 2. For example, installation positions (heights from the ground surface and positions in the left-right direction) and detection axes (optical axes with the camera) of the cameras and the ultrasonic sensors 9A to 9L provided in the vehicle 2, a total length, a vehicle width, a wheelbase, and a minimum turning radius are stored. Such these pieces of information are input in advance by the occupant or a person on a vehicle manufacturer side. The vehicle-occupied area DB 39 is a DB that stores the vehicle-occupied area that indicates an area occupied by the vehicle.

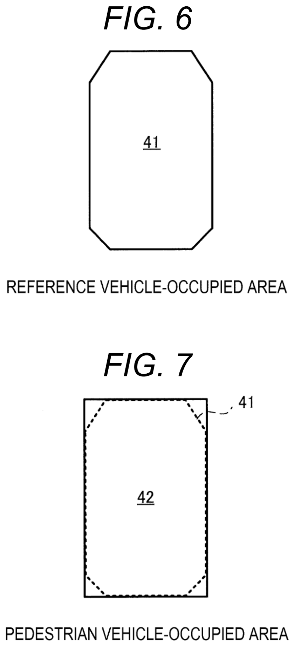

Here, describing the vehicle-occupied area, when the vehicle is located on a road surface, the vehicle-occupied area indicates an area occupied by the vehicle on the road surface. A shape of the vehicle-occupied area is set to a shape matching the actual shape of the vehicle as much as possible. For example, an octagonal area illustrated in Fig. 6 is set as a vehicle-occupied area 41. Since the vehicle-occupied area 41 has a shape corresponding to the shape of the vehicle including the driving assistance device 1, a shape and a size of the vehicle-occupied area 41 vary depending on the type of the vehicle including the driving assistance device 1. In the example illustrated in Fig. 6, the vehicle-occupied area 41 has a relatively simple octagonal shape, but may have a polygonal shape corresponding to the shape of the vehicle in more detail, and an outline may be curved instead of a straight line.

Then, as will be described later, when specifying the positional relationship between the object detected around the vehicle and the vehicle, the driving assistance device 1 disposes the vehicle-occupied area 41 on a map that is a virtual two-dimensional space prepared for specifying the positional relationship, and plots position coordinates of the detected object on the map. Then, the positional relationship between the object and the vehicle is specified by comparing the vehicle-occupied area 41 on the map with the position coordinates of the plotted object. More details will be described below.

In the present embodiment, not only one type but also a plurality of types of vehicle-occupied areas are provided. Specifically, a plurality of vehicle-occupied areas having a plurality of different shapes are provided according to the type of the object for which the positional relationship is to be specified. In particular, in the present embodiment, a pedestrian vehicle-occupied area 42 illustrated in Fig. 7, which is used when the object for which the positional relationship is to be specified is a pedestrian, is provided. A shape of the pedestrian vehicle-occupied area 42 is a rectangular shape (rectangle) although it is close to the reference (general-purpose) vehicle-occupied area 41 illustrated in Fig. 6, and is wider than the reference vehicle-occupied area 41. More specifically, the shape is such that four corners are wider than those of the reference vehicle-occupied area 41, and the shape of the reference vehicle-occupied area 41 is obtained by excluding the four corners of the pedestrian vehicle-occupied area 42 as illustrated in Fig. 7.

As will be described later, the driving assistance device 1 uses the pedestrian vehicle-occupied area 42 in place of the reference vehicle-occupied area 41 when specifying the positional relationship with the vehicle, particularly when the object detected around the vehicle is a pedestrian.

In the present embodiment, the vehicle-occupied area stored in the vehicle-occupied area DB 39 includes two types of vehicle-occupied areas, that is, the reference vehicle-occupied area 41 (applied to cases other than pedestrians) illustrated in Fig. 6 and the pedestrian vehicle-occupied area 42 illustrated in Fig. 7. For example, a dedicated vehicle-occupied area may be provided for each type of object for which the positional relationship is to be specified, and in this case, a vehicle-occupied area for bicycles, a vehicle-occupied area for vehicles, and a vehicle-occupied area for stationary objects such as a utility pole or a wall may be further provided.

Next, the probe wave detection processing program executed by the driving assistance ECU 10 in the driving assistance device 1 having the above-described configuration will be described with reference to Fig. 8. Fig. 8 is a flowchart of the probe wave detection processing program according to the present embodiment. Here, the probe wave detection processing program is a program that is repeatedly executed at a predetermined execution interval (for example, 200 ms) after an accessory (ACC) power supply of the vehicle 2 is turned on, and that detects an object around the vehicle 2 using the detection results of the ultrasonic sensors 9A to 9L. The program illustrated in the flowchart in Figs. 8 to 10 is stored in the RAM 32 or the ROM 33 provided in the driving assistance device 1 and is executed by the CPU 31.

Processing of the following step (hereinafter abbreviated as S) 1 to S3 is processing of specifying the position of the object using the detection results of the ultrasonic sensors 9A to 9L provided in the vehicle 2, and is performed for all the ultrasonic sensors 9A to 9L provided in the vehicle 2. For example, hereinafter, a case in which the position of the object is specified by the probe wave transmitted from the ultrasonic sensor 9A will be described as an example. The probe waves are always transmitted from the ultrasonic sensors 9A to 9L at regular time intervals, and the following processing after S1 is repeatedly executed until an end condition (for example, the ACC is turned off) is satisfied.

First, in S1, when the ultrasonic sensor 9A (a first sensor) receives, as the direct wave, the reflected wave of the probe wave transmitted by the ultrasonic sensor 9A, the CPU 31 measures the distance Dr (a first detection distance) from the ultrasonic sensor 9A to the position P illustrated in Fig. 4 based on a time from the transmission of the probe wave to the reception of the direct wave. When the ultrasonic sensor 9B (a second sensor) receives, as the indirect wave, the reflected wave of the probe wave transmitted from the ultrasonic sensor 9A, the CPU 31 measures the sum (a second detection distance) of the distance Dr from the ultrasonic sensor 9A to the position P and the distance Di from the ultrasonic sensor 9B to the position P illustrated in Fig. 4 based on the time from the transmission of the probe wave to the reception of the reflected wave. When neither the direct wave nor the reflected wave is received, the processing after S2 is not performed.

Next, in S2, the CPU 31 determines whether triangulation is established. Although the detection of the object using triangulation has already been described with reference to Fig. 4, the detection is performed using the distance Dr from the ultrasonic sensor 9A to the position P, the sum of the distance Dr from the ultrasonic sensor 9A to the position P and the distance Di from the ultrasonic sensor 9B to the position P, and the distance Db between the ultrasonic sensor 9A and the ultrasonic sensor 9B. Here, if either the direct wave or the indirect wave cannot be detected, the triangulation is not established, and even when both the direct wave and the indirect wave are detected, the triangulation may not be established when the difference between the distance Dr and the distance Di is large and triangulation points cannot be connected.

Then, if it is determined that the ultrasonic sensor 9A receives the reflected wave of the probe wave transmitted by the ultrasonic sensor 9A as the direct wave, the ultrasonic sensor 9B receives the reflected wave of the probe wave transmitted from the ultrasonic sensor 9A as the indirect wave, and the triangulation is established between the distance Dr and the distance Di (YES in S2), the processing proceeds to S3. On the other hand, if it is determined that at least one of the direct wave and the indirect wave cannot be received, or if it is determined that the triangulation is not established between the distance Dr and the distance Di even when the direct wave and the indirect wave can be received (NO in S2), the processing is ended without specify the position of the object. However, if at least the direct wave can be received, the position of the object cannot be specified but the distance to the object can be specified, and therefore, it is possible to perform assistance using the distance to the object.

In S3, the CPU 31 specifies specific position coordinates (X, Y (a relative position with respect to the vehicle)) of the position P of the object using a result of the established triangulation. The specified position coordinates are stored in the flash memory 34 or the like. In particular, when the object has a width, a range in which the object is located is also specified by a coordinate sequence. When a plurality of objects are detected, position coordinates of each of the plurality of detected objects are specified. The details of the triangulation have already been described with reference to Fig. 4, and thus will be omitted.

Next, the processing of S1 to S3 is also performed on the probe wave transmitted from the ultrasonic sensor 9B provided in the vehicle 2 to specify the position of the object. The same applies to the ultrasonic sensors 9C to 9L.

However, since the ultrasonic sensors 9E to 9H disposed on the side surfaces of the vehicle 2 cannot detect the object by the indirect wave, the distance to the object is measured only by the direct wave. For the ultrasonic sensors 9E to 9H, when distance measurement values are continuously acquired during the movement of the vehicle 2, the position of the object can also be calculated by triangulation using a distance measurement value of the previous position, a distance measurement value of the current position, and a movement distance therebetween. For the ultrasonic sensor 9B located in the vicinity of the center of the vehicle, since the ultrasonic sensor 9A and the ultrasonic sensor 9C located on the left and right sides can receive the indirect wave, the specification of the position of the object by triangulation based on the indirect wave received by the ultrasonic sensor 9A and the specification of the position of the object by triangulation based on the indirect wave received by the ultrasonic sensor 9C are executed in S3. The same applies to the ultrasonic sensors 9C, 9J, and 9K.

Next, the image detection processing program executed by the driving assistance ECU 10 in the driving assistance device 1 will be described with reference to Fig. 9. Fig. 9 is a flowchart of the image detection processing program according to the present embodiment. Here, the image detection processing program is a program that is repeatedly executed at a predetermined execution interval (for example, 100 ms) after the accessory (ACC) power supply of the vehicle 2 is turned on, and that detects an object around the vehicle 2 using the captured images captured by the front camera 6, the rear camera 7 and the side cameras 8A and 8B. The probe wave detection processing program of Fig. 8 and the image detection processing program of Fig. 9 are executed independently and in parallel. In the present embodiment, the probe wave detection processing program and the image detection processing program are executed at different intervals, but the execution intervals may be the same.

The following processing of S5 to S7 is processing of specifying the position of the object using the captured images captured by the front camera 6, the rear camera 7, and the side cameras 8A and 8B provided in the vehicle 2, and is performed for all the front camera 6, the rear camera 7, and the side cameras 8A and 8B provided in the vehicle 2. For example, hereinafter, a case where the position of the object is specified based on the captured image captured by the front camera 6 will be described as an example. The front camera 6, the rear camera 7, and the side cameras 8A and 8B always capture images of the surroundings of the vehicle at a predetermined frame rate, and the following processing in S5 and subsequent steps is repeatedly executed until an end condition (for example, the ACC is turned off) is satisfied.

First, in S5, the CPU 31 acquires a real-time captured image captured by the front camera 6. The front camera 6 has an imaging range in front of the vehicle in the traveling direction, and captures an image of a current situation in front of the vehicle in the traveling direction.

Next, in S6, the CPU 31 performs the image recognition processing on the captured image acquired in S5 to detect the objects included in the captured image. The type of the object to be detected is not particularly limited, and may include a stationary object such as a utility pole, a wall, or a step in addition to a moving object such as a pedestrian, a bicycle, or other vehicles. On the other hand, only a specific type of object, such as a pedestrian, may be a detection target.

As processing of detecting the object in S6, for example, it is possible to perform luminance correction based on a luminance difference between the road surface and the object, and then detect a boundary line between the road surface and the object by performing binarization processing of separating the object from the image, geometric processing of correcting a distortion, smoothing processing of removing a noise in the image, and the like. Detection may be performed using known template matching processing, feature point detection processing, or the like. The image recognition processing on the captured image is not limited to the above example, and may be performed using, for example, machine learning.

Thereafter, in S7, the CPU 31 specifies specific position coordinates (X, Y (a relative position with respect to the vehicle)) of the position P of the object using a result of the image recognition processing of S6. When a plurality of objects are detected, position coordinates of each of the plurality of detected objects are specified. Basically, since the distortion of the image is smaller in the vicinity of the road surface, coordinates of a contact point (foot in the case of a person) between the detected object and the road surface are specified. The type of the object (for example, a pedestrian, other vehicles, a bicycle, or a utility pole) detected based on the result of the image recognition processing is also specified. The specified position coordinates and the specified type of the object are stored in the flash memory 34 or the like.

The processing of S5 to S7 is also performed on the captured images captured by the other cameras of the rear camera 7 and the side cameras 8A and 8B provided in the vehicle 2, and the position of the object is specified.

Next, the driving assistance processing program executed by the driving assistance ECU 10 in the driving assistance device 1 will be described with reference to Fig. 10. Fig. 10 is a flowchart of the driving assistance processing program according to the present embodiment. Here, the driving assistance processing program is a program that is executed after the accessory (ACC) power supply of the vehicle 2 is turned on, and performs various types of assistance for the detected object by using the detection results of the probe wave detection processing program (Fig. 8) and the image detection processing program (Fig. 9) described above.

First, in S11, the CPU 31 acquires the latest detection results of the probe wave detection processing program (Fig. 8) and the image detection processing program (Fig. 9). Specifically, as the detection result of the probe wave detection processing program, the position coordinates of the object around the host vehicle detected using the ultrasonic sensors 9A to 9L are acquired, and as the detection result of the image detection processing program, the position coordinates and the type of the object around the host vehicle detected from the captured images of the front camera 6, the rear camera 7, and the side cameras 8A and 8B are acquired. However, the position coordinates of the object detected by the probe wave detection processing program and the position coordinates and the type of the object detected by the image detection processing program are not necessarily acquired when the object is present around the vehicle, and for example, when the object is at a position where it is difficult to receive the indirect wave, the triangulation is not established, and the position coordinates of the object may not be acquired by the probe wave detection processing program. Similarly, for example, when the object is located in a blind spot of the camera or too close to the camera, the position coordinates and the type of the object may not be acquired by the image detection processing program.

Subsequently, in S12, the CPU 31 determines whether at least the position coordinates and the type of the object are acquired as the latest detection result of the image detection processing program in S11.

Then, if it is determined that the position coordinates and the type of the object are acquired as the detection result of the image detection processing program (YES in S12), the processing proceeds to S13. On the other hand, if it is determined that the position coordinates and the type of the object are not acquired by the image detection processing program (NO in S12), the processing proceeds to S20.

The following processing in S13 and subsequent steps is performed for each object whose position coordinates are acquired by the image detection processing program. Therefore, when the position coordinates of a plurality of objects are acquired, the processing of S13 and subsequent steps is performed for the plurality of objects.

In S13, the CPU 31 determines whether the type of the object detected in the image detection processing is a pedestrian based on the detection result of the image detection processing acquired in S11. The pedestrian does not necessarily refer to a person who is walking, and a person is basically regarded as a pedestrian regardless of whether the person is standing or running. The pedestrian may also include a person in a wheelchair or a person on a bicycle.

If it is determined that the type of the object is a pedestrian (YES in S13), the processing proceeds to step S14. On the other hand, when the type of the object is other than a pedestrian or the type cannot be determined (NO in S13), the processing proceeds to S17.

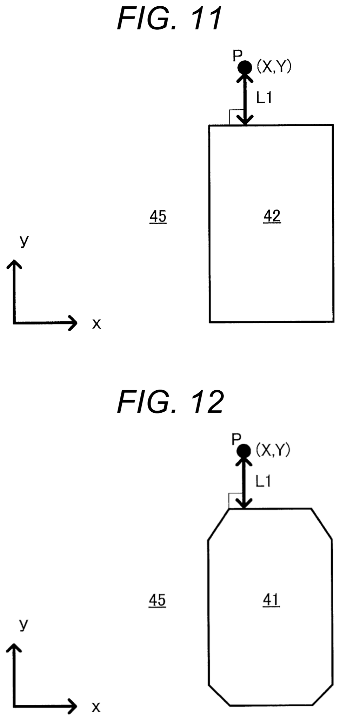

In S14, the CPU 31 reads the pedestrian vehicle-occupied area 42 from the flash memory 34, and disposes the pedestrian vehicle-occupied area 42 on a map 45. As illustrated in Fig. 11, the map 45 is a virtual two-dimensional space prepared for specifying the positional relationship between the host vehicle and the detected object. For example, an x axis and a y axis of the map 45 are set in a horizontal direction (parallel to the road surface) with the current position (for example, a center of a rear wheel shaft) of the host vehicle as an origin. A position where the vehicle-occupied area 42 is disposed with respect to the map 45 is a position corresponding to the current position of the host vehicle. That is, the center of the rear wheel shaft is the origin. However, the map 45 may be a three-dimensional space also having height information. As described above, the pedestrian vehicle-occupied area 42 has a rectangular shape (rectangle) close to that of the reference vehicle-occupied area 41.

Subsequently, in S15, the CPU 31 plots the position coordinates of the object detected by the image detection processing on the same map 45 in which the vehicle-occupied area 42 is disposed. Accordingly, the position of the object is specified on the map 45.

Thereafter, in S16, the CPU 31 calculates a collision linear distance L1, which is a shortest distance from an end portion in the traveling direction of the pedestrian vehicle-occupied area 42 disposed on the map 45 to the object along the traveling direction of the vehicle. For example, when a position coordinate P (X, Y) of the object is plotted as illustrated in Fig. 11, a line segment is drawn in the traveling direction of the vehicle (a length direction of the vehicle) from the position coordinate P to the vehicle-occupied area 42, and a length of the line segment is the collision linear distance L1. The collision linear distance L1 is information for specifying the positional relationship between the object and the vehicle on the map 45. Thereafter, the processing proceeds to S20.

In contrast, in S17, the CPU 31 reads the reference vehicle-occupied area 41 from the flash memory 34 and disposes the reference vehicle-occupied area 41 on the map 45. A position where the vehicle-occupied area 41 is disposed with respect to the map 45 is a position corresponding to the current position of the host vehicle. That is, the center of the rear wheel shaft is the origin. As described above, the reference vehicle-occupied area 41 has a shape matching the actual shape of the host vehicle as much as possible, and is, for example, an octagonal area.

Subsequently, in S18, the CPU 31 plots the position coordinates of the object detected by the image detection processing on the same map 45 in which the vehicle-occupied area 41 is disposed. Accordingly, the position of the object is specified on the map 45.

Thereafter, in S19, the CPU 31 calculates the collision linear distance L1, which is the shortest distance from an end portion in the traveling direction of the reference vehicle-occupied area 41 disposed on the map 45 to the object along the traveling direction of the vehicle. For example, when the position coordinate P (X, Y) of the object is plotted as illustrated in Fig. 12, a line segment is drawn in the traveling direction of the vehicle (the length direction of the vehicle) from the position coordinate P to the vehicle-occupied area 41, and a length of the line segment is the collision linear distance L1. The collision linear distance L1 is information for specifying the positional relationship between the object and the vehicle on the map 45. Thereafter, the processing proceeds to S20.

Subsequently, in S20, the CPU 31 determines whether at least the position coordinates of the object are acquired as the latest detection result of the probe wave detection processing program in S11.

Then, if it is determined that the position coordinates of the object are acquired as the detection result of the probe wave detection processing program (YES in S20), the processing proceeds to S21. On the other hand, if it is determined that the position coordinates of the object are not acquired as the detection result of the probe wave detection processing program (NO in S20), the processing proceeds to S31 without performing driving assistance relative to the object. However, even when the position coordinates of the object are not acquired as the latest detection result of the probe wave detection processing program, when the object can be detected in the image detection processing, the processing may proceed to S29, and driving assistance (for example, warning or deceleration control when the collision linear distance L1 is equal to or less than a predetermined distance) for the object may be performed using the collision linear distance L1 calculated in S16 or S19.

The following processing in S21 and subsequent steps is performed for each object whose position coordinates are acquired by the probe wave detection processing program. Therefore, when the position coordinates of the plurality of objects are acquired, the processing of S21 and subsequent steps is performed for the plurality of objects.

In S21, the CPU 31 reads the reference vehicle-occupied area 41 from the flash memory 34 and disposes the reference vehicle-occupied area 41 on the map 45. As illustrated in Fig. 12, the map 45 is a virtual two-dimensional space prepared for specifying the positional relationship between the host vehicle and the detected object. For example, an x axis and a y axis of the map 45 are set in the horizontal direction (parallel to the road surface) with the current position (for example, the center of the rear wheel shaft) of the host vehicle as an origin. A position where the vehicle-occupied area 41 is disposed with respect to the map 45 is a position corresponding to the current position of the host vehicle. That is, the center of the rear wheel shaft is the origin. However, the map 45 may be a three-dimensional space also having the height information. As described above, the reference vehicle-occupied area 41 has a shape matching the actual shape of the host vehicle as much as possible, and is, for example, an octagonal area.

Subsequently, in S22, the CPU 31 plots the position coordinates of the object detected by the probe wave detection processing on the same map 45 in which the vehicle-occupied area 41 is disposed. Accordingly, the position of the object is specified on the map 45.

Thereafter, in S23, the CPU 31 calculates the collision linear distance L1, which is the shortest distance from the end portion in the traveling direction of the reference vehicle-occupied area 41 disposed on the map 45 to the object along the traveling direction of the vehicle. For example, when the position coordinate P (X, Y) of the object is plotted as illustrated in Fig. 12, a line segment is drawn in the traveling direction of the vehicle (the length direction of the vehicle) from the position coordinate P to the vehicle-occupied area 41, and a length of the line segment is the collision linear distance L1. The collision linear distance L1 is information for specifying the positional relationship between the object and the vehicle on the map 45. When the collision linear distance L1 is calculated in S16 or S19, the accuracy of a detection position is more reliable in the detection result of the probe wave detection processing than in the image detection processing, and therefore, the collision linear distance L1 is basically overwritten.

Next, in S24, the CPU 31 performs same-object determination processing of determining whether the object whose position is specified by the probe wave detection processing and the object whose position is specified by the image detection processing can be regarded as the same object.

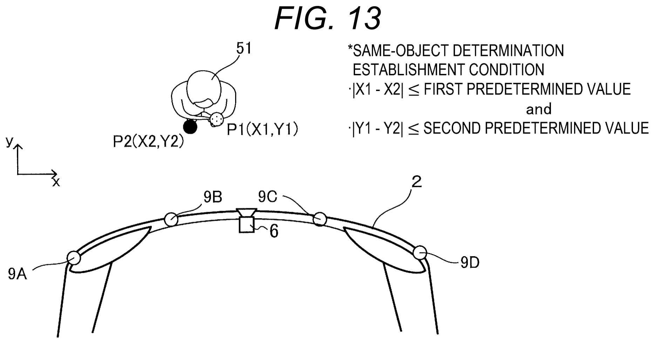

Hereinafter, the same-object determination processing of S24 will be described with reference to Fig. 13.

For example, in the example illustrated in Fig. 13, it is assumed that position coordinates of a pedestrian 51 that is the object specified by the probe wave detection processing are P1 (X1, Y1), and position coordinates of a pedestrian that is the object specified by the image detection processing are P2 (X2, Y2). When a difference between X1 and X2 is equal to or less than a first predetermined value and a difference between Y1 and Y2 is equal to or less than a second predetermined value, it is determined that the object whose position is specified by the probe wave detection processing and the object whose position is specified by the image detection processing are regarded as the same object (same-object determination is established). The first predetermined value and the second predetermined value can be appropriately set, and the first predetermined value and the second predetermined value may be different values from each other or may be the same value. The first predetermined value and the second predetermined value may be set according to the performance of the sensor or the camera.

On the other hand, when the difference between X1 and X2 is larger than the first predetermined value or the difference between Y1 and Y2 is larger than the second predetermined value, it is determined that the object whose position is specified by the probe wave detection processing and the object whose position is specified by the image detection processing are not the same object (the same-object determination is not established). In this case, for example, a case where different objects are detected in the probe wave detection processing and the image detection processing can be assumed.

When the position of the object cannot be specified by the image detection processing, the same-object determination is not established.

Then, if the same-object determination processing of S24 is established, that is, if the object whose position is specified by the probe wave detection processing and the object whose position is specified by the image detection processing are regarded as the same object (YES in S25), the processing proceeds to S26. On the other hand, if the same-object determination processing of S24 is not established, that is, if the object whose position is specified by the probe wave detection processing and the object whose position is specified by the image detection processing cannot be regarded as the same object (NO in S25), the processing proceeds to S29.

In S26, based on the detection result of the image detection processing acquired in S11, the CPU 31 determines whether a type of the same determination object, which is the object for which the same-object determination is established, is a pedestrian. The pedestrian does not necessarily refer to a person who is walking, and a person is basically regarded as a pedestrian regardless of whether the person is standing or running. The pedestrian may also include a person in a wheelchair or a person on a bicycle.

If it is determined that the type of the same determination object is a pedestrian (YES in S26), the processing proceeds to S27. On the other hand, if the type of the same determination object is other than a pedestrian or the type cannot be determined (NO in S26), the processing proceeds to S29.

In S27, the CPU 31 reads the pedestrian vehicle-occupied area 42 from the flash memory 34, and disposes the pedestrian vehicle-occupied area 42 on the map 45. A position where the vehicle-occupied area 42 is disposed with respect to the map 45 is a position corresponding to the current position of the host vehicle. That is, the center of the rear wheel shaft is the origin. As described above, the pedestrian vehicle-occupied area 42 has a rectangular shape (rectangle) close to that of the reference vehicle-occupied area 41.

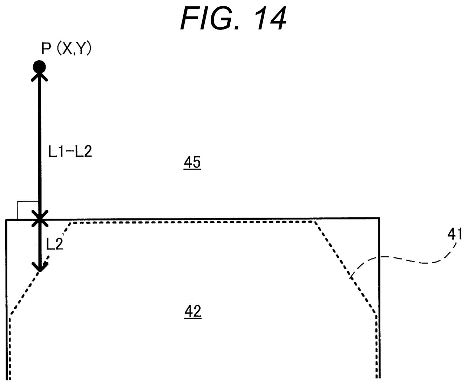

In S27, the CPU 31 calculates a difference L2 between the reference vehicle-occupied area 41 and the pedestrian vehicle-occupied area 42 disposed on the same map 45. Regarding a method for calculating the difference L2, when the position coordinate P (X, Y) of the object is plotted as illustrated in Fig. 14, a line segment is drawn from the position coordinate P to the vehicle-occupied area 42 in the traveling direction of the vehicle (the length direction of the vehicle). A difference between positions of the vehicle-occupied area 41 and the vehicle-occupied area 42 along the line segment is defined as the difference L2. In other words, a difference between a distance from the position coordinate P to the reference vehicle-occupied area 41 and a distance from the position coordinate P to the pedestrian vehicle-occupied area 42 is the difference L2. In the present embodiment, the difference L2 is zero when the position of the object is in front of the vicinity of the center of the vehicle, and the difference L2 increases as the position of the object approaches the vicinity of the left and right ends of the vehicle.

Thereafter, in S28, the CPU 31 corrects the collision linear distance L1 calculated in S23 to a collision linear distance L1' based on the pedestrian vehicle-occupied area 42. That is, the CPU 31 calculates the collision linear distance L1', which is the shortest distance from the end portion in the traveling direction of the pedestrian vehicle-occupied area 42 disposed on the map 45 to the object along the traveling direction of the vehicle. The collision linear distance L1' is calculated by the following equation (1).

$$L1' = L1 - L2 \ (1)$$

Subsequently, in S29, the CPU 31 determines whether the collision linear distance L1 calculated in S23 or the collision linear distance L1' calculated in S28 (priority is given to the collision linear distance L1' when the collision linear distance L1' is calculated) is equal to or less than a predetermined distance. The predetermined distance changes depending on the current speed of the vehicle and is set to be longer as the speed of the vehicle increases. For example, the predetermined distance is 50 cm when the speed is 5 km/h, and is 200 cm when the speed is 10 km/h.

Then, if it is determined that the collision linear distance L1 calculated in S23 or the collision linear distance L1' calculated in S28 is equal to or less than the predetermined distance (YES in S29), a warning or deceleration control is performed on an approaching object (S30). That is, the collision linear distance being equal to or less than the predetermined distance is the assistance start condition for starting the vehicle assistance relative to the object.

For example, when issuing a warning, a warning sound may be output, or a scene around the vehicle (which may be an actual scene or a virtual CG scene) may be displayed on an in-vehicle display, and a warning image indicating the presence of an object may be superimposed and displayed in the scene. In contrast, when the deceleration control is performed, the brake is automatically operated. In particular, when the autonomous driving assistance is being executed, it is also possible to stop the vehicle by performing the deceleration control and interrupting the autonomous driving assistance. The warning and the deceleration control for the object are continuously performed in a state where the condition of S29 is satisfied.

The driving assistance processing program illustrated in Fig. 10 is repeatedly executed while the ACC power supply of the vehicle is turned on, and is repeatedly executed at a predetermined processing interval (for example, 200 ms) also in the same-object determination processing of S24. Therefore, even for the same object, the same-object determination may change from failure to an established state (or vice versa) due to a change in the position of the object. For example, even when the object is a pedestrian, the object cannot be determined to be a pedestrian before the same-object determination is established. Therefore, even when the object is a pedestrian, the collision linear distance L1 is calculated using the reference vehicle-occupied area 41 until the same-object determination is established, and the determination processing of S29 is performed. Thereafter, when the same-object determination is established, it can be determined that the object is a pedestrian. Therefore, after the same-object determination is established, the collision linear distance L1' is calculated using the pedestrian vehicle-occupied area 42, and the determination processing of S29 is performed.

On the other hand, if it is determined that the collision linear distance L1 calculated in S23 or the collision linear distance L1' calculated in S28 is not equal to or less than the predetermined distance (NO in S29), the processing proceeds to S31 without performing warning or deceleration control on the object.

Thereafter, in S31, the CPU 31 determines whether the ACC power supply is turned off. Then, if it is determined that the ACC power supply is turned off (YES in S31), the driving assistance processing program is ended. On the other hand, if it is determined that the ACC power supply is not turned off (NO in S31), the processing returns to S11.

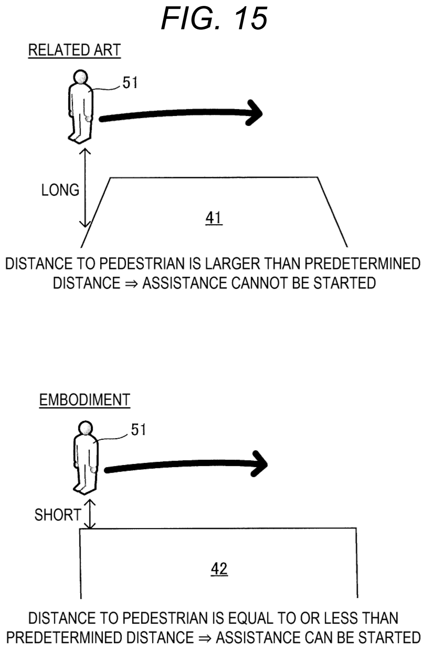

As described above, in the driving assistance processing program (Fig. 10) according to the present embodiment, when the object is a pedestrian, the collision linear distance, which is a distance from the vehicle to the object to be assisted, is calculated based on the pedestrian vehicle-occupied area 42 having a rectangular shape (S16, S27, and S28). Here, for example, as illustrated in Fig. 15, when the pedestrian 51 crosses right and left in front of the vehicle, when the reference (general-purpose) vehicle-occupied area 41 is used as in the related art, the distance from the vehicle 2 to the pedestrian 51 is larger than the predetermined distance at a stage where the pedestrian 51 is located near the right and left ends of the vehicle 2, the assistance start condition is not satisfied, and the start of the assistance for the pedestrian 51 is delayed. In contrast, when the pedestrian vehicle-occupied area 42 is used as in the present embodiment, the distance from the vehicle 2 to the pedestrian 51 is equal to or less than the predetermined distance serving as the assistance start condition at the stage where the pedestrian 51 is located near the left and right ends of the vehicle 2, and therefore, it is possible to start the warning or the deceleration control for the pedestrian 51 at an earlier timing. Although Fig. 15 illustrates the case where the pedestrian crosses in front of the vehicle 2, the same effect can be obtained when the pedestrian crosses behind the vehicle 2.

A processing order of the steps of the driving assistance processing program (Fig. 10) is not limited to the order described in Fig. 10. For example, the processing of S21 may be executed after the processing of S22 is executed.

As described above in detail, according to the driving assistance device 1 and the computer program executed by the driving assistance device 1 of the present embodiment, the probe wave detection processing (S1 to S3) and the image detection processing (S5 to S7) of detecting the position and the type of the object around the vehicle are performed, the vehicle-occupied areas 41 and 42 that indicate the area occupied by the vehicle with respect to the position of the vehicle and have different shapes according to the type of the object are disposed on the map 45 (S14, S17, S21, and S27), the position of the object detected by the probe wave detection processing and the image detection processing is specified on the map (S15, S18, and S22), the positional relationship between the vehicle-occupied areas 41 and 42 and the object on the map 45 is specified (S16, S19, S23, and S28), and the driving assistance of the vehicle with respect to the object is performed when the positional relationship satisfies the predetermined assistance start condition (S30). Therefore, it is possible to execute the driving assistance of the vehicle at an appropriate timing according to the type of the object.

Since the vehicle-occupied area 42, which is disposed when the object for which the positional relationship is to be specified is a pedestrian, has a larger shape than the vehicle-occupied area 41, which is disposed when the object is other than a pedestrian, it is possible to start assistance for a pedestrian at an earlier timing.

Since the vehicle-occupied area 42, which is disposed when the object for which the positional relationship is to be specified is a pedestrian has a shape in which the corners are wider than those of the vehicle-occupied area 41, which is disposed when the object is other than a pedestrian, it is possible to start assistance for a pedestrian at a stage where the pedestrian is located near the left and right ends of the vehicle particularly when the pedestrian crosses the front or rear of the vehicle in the left-right direction.

Since the vehicle-occupied area 42, which is disposed when the object for which the positional relationship is to be specified is a pedestrian, has a rectangular shape, and the vehicle-occupied area 41, which is disposed when the object for which the positional relationship is to be specified is other than a pedestrian, has a polygonal shape excluding the corners of the rectangular shape, it is possible to achieve an object of starting assistance for a pedestrian at an earlier timing without making the vehicle-occupied area complex in shape.

Appendix

The above embodiment also discloses the following techniques. In the following description, names or expressions of the corresponding configurations in the embodiment and reference numerals used in the drawings are parenthesized for reference. However, the constituent elements of each technique are not limited to Appendix.

Technique A

The driving assistance device (1) according to claim 1, in which

in specifying of the positional relationship between the vehicle-occupied area (41, 42) and the object (51), a collision linear distance (L1, L1') that is a shortest distance from an end portion in a traveling direction of the vehicle-occupied area disposed on the map (45) to the object along a traveling direction of the vehicle (2) is calculated, and
the assistance start condition is that the collision linear distance is equal to or less than a predetermined distance.

Accordingly, it is possible to accurately specify the positional relationship between the vehicle-occupied area and the object based on the vehicle-occupied area disposed on the map and the position of the object specified on the map.

Technique B

The driving assistance device according to Technique A, in which

the vehicle-occupied area has a reference vehicle-occupied area (41),
the collision linear distance (L1) is calculated using the reference vehicle-occupied area in a state where the type of the object (51) cannot be specified and only the position of the object can be specified by the object detection processing, and
the collision linear distance (L1') is calculated using the collision linear distance calculated using the reference vehicle-occupied area and a difference (L2) in shape between the reference vehicle-occupied area and the vehicle-occupied area (42) set according to the type of the specified object in a state where the position and the type of the object can be specified by the object detection processing.

Accordingly, it is possible to specify the positional relationship between the vehicle-occupied area and the object using the general-purpose vehicle-occupied area until the type of the object can be specified, and in contrast, it is possible to more appropriately specify the positional relationship between the vehicle-occupied area and the object using the dedicated vehicle-occupied area after the type of the object can be specified.

Technique C

The driving assistance device according to Technique A, in which

the object detection processing includes

acquiring detection results of a plurality of detection sensors (9A to 9L) that are provided at different locations of the vehicle (2) and are in such a positional relationship that the plurality of detection sensors are able to transmit probe waves to surroundings of the vehicle and receive from each other received waves including reflected waves of the probe waves reflected by the object around the vehicle,
probe wave detection processing (S1 to S3) of specifying, based on the acquired detection results of detection sensors, the position of the object by triangulation using a first detection distance and a second detection distance, the first detection distance being calculated by receiving the reflected wave of the probe wave as the direct wave by a detection sensor serving as a transmission source, the second detection distance being calculated by receiving the reflected wave of the probe wave as the indirect wave by another detection sensor different from the detection sensor serving as the transmission source, and
image detection processing (S5 to S7) of specifying the position and the type of the object around the vehicle as a result of image recognition processing on a captured image captured by an image-capturing device provided in the vehicle,

the vehicle-occupied area has a reference vehicle-occupied area (41),
the collision linear distance (L1) is calculated using the reference vehicle-occupied area until the object (51) detected by the probe wave detection processing and the object detected by the image detection processing can be considered to be the same object; and
after the object detected by the probe wave detection processing and the object detected by the image detection processing are deemed to be the same object, the collision linear distance (L1') is calculated using the collision linear distance calculated using the reference vehicle-occupied area and the difference (L2) in shape between the reference vehicle-occupied area and the vehicle-occupied area (42) set according to the type of object specified by the image detection processing.

Accordingly, it is possible to specify the positional relationship between the vehicle-occupied area and the object using the general-purpose vehicle-occupied area before the object detected by the probe wave detection processing and the object detected by the image detection processing are regarded as the same object, and it is possible to more appropriately specify the positional relationship between the vehicle-occupied area and the object using the dedicated vehicle-occupied area after the object detected by the probe wave detection processing and the object detected by the image detection processing are regarded as the same object.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the present embodiment, as the vehicle-occupied area disposed on the map 45, any one of two types of the reference vehicle-occupied area 41 (applied to other than a pedestrian) and the pedestrian vehicle-occupied area 42 is disposed, but more types of vehicle-occupied areas may be disposed. For example, a vehicle-occupied area having different shapes may be disposed for each type of object for which the positional relationship is to be specified, and in this case, a vehicle-occupied area for bicycles, a vehicle-occupied area for vehicles, and a vehicle-occupied area for stationary objects such as a utility pole or a wall may be further provided.

In the present embodiment, the reference vehicle-occupied area 41 is an octagonal area, and the pedestrian vehicle-occupied area 42 is a rectangular area, but the shape is not limited to the above example. For example, the reference vehicle-occupied area 41 may be a polygonal area having a larger number of vertices.

In the present embodiment, the detection results of all the ultrasonic sensors 9A to 9L provided in the vehicle 2 are used as the detection results of the probe wave detection processing used in the same-object determination processing of S24, but the detection results of only a part of the ultrasonic sensors may be used. For example, only the detection results of the ultrasonic sensors 9A to 9D disposed on the front surface of the vehicle 2 and the ultrasonic sensors 9I to 9L disposed on the rear surface of the vehicle 2 may be used.

Similarly, in the present embodiment, the detection results of all the cameras provided in the vehicle 2 are used as the detection results of the image detection processing used in the same-object determination processing of S24, but the detection results of only a part of cameras may be used. For example, only the detection results of the front camera 6 disposed on the front surface of the vehicle 2 and the rear camera 7 disposed on the rear surface of the vehicle 2 may be used.

The same-object determination (S24) is not essential, and the same-object determination may not be performed. In this case, the image detection processing may be used only for specifying the type of the object, and the determination processing in step S26 may be performed based on the result of the image detection processing. The processing of S12 to S19 may also be omitted.

In the present embodiment, the example in which the warning or the deceleration control for the object approaching the host vehicle is performed as the assistance for the object is described, but the assistance content can be appropriately changed, and for example, only the warning may be performed. Alternatively, only the deceleration control may be performed. In addition to the warning and the deceleration control, avoidance control or the like can be performed.

In the present embodiment, the driving assistance ECU 10 of the driving assistance device 1 executes processing including the probe wave detection processing program (see Fig. 8), the image detection processing program (see Fig. 9), and the driving assistance processing program (Fig. 10), and the execution subject can be changed as appropriate. For example, a control unit of the liquid crystal display 4, a vehicle control ECU, a control unit of a navigation device, and other in-vehicle devices may execute the processing.

## Claims

1. A driving assistance device (1), wherein

   object detection processing of detecting a position and a type of an object (15) around a vehicle (2) is performed,
   a vehicle-occupied area that indicates an area occupied by the vehicle with respect to a position of the vehicle and has different shapes according to the type of the object is disposed on a map (45),
   the position of the object is specified on the map,
   a positional relationship between the vehicle-occupied area and the object on the map is specified, and
   driving assistance of the vehicle relative to the object is performed when the positional relationship satisfies a predetermined assistance start condition.

2. The driving assistance device according to claim 1, wherein
   the vehicle-occupied area disposed when the object for which the positional relationship is to be specified is a pedestrian has a larger shape than the vehicle-occupied area disposed when the object is other than a pedestrian.

3. The driving assistance device according to claim 2, wherein
   the vehicle-occupied area disposed when the object for which the positional relationship is to be specified is a pedestrian has a shape with wider angles than the vehicle-occupied area disposed when the object is other than a pedestrian.

4. The driving assistance device according to claim 2 or 3, wherein

   the vehicle-occupied area disposed when the object for which the positional relationship is to be specified is a pedestrian has a rectangular shape, and
   the vehicle-occupied area disposed when the object for which the positional relationship is to be specified is other than a pedestrian has a polygonal shape excluding corners of the rectangular shape.

# FIG. 1

## FIG. 2

## FIG. 3

# FIG. 4

# FIG. 5

## FIG. 6

REFERENCE VEHICLE-OCCUPIED AREA

## FIG. 7

PEDESTRIAN VEHICLE-OCCUPIED AREA

EP 4 763 643 A1

## FIG. 8

START
(PREDETERMINED
EXECUTION INTERVAL)

↓

EACH SENSOR
(TRANSMISSION SOURCE)

↓ S1

ACQUIRE
DETECTION RESULT

↓

THERE ARE BOTH
DIRECT WAVE AND
REFLECTED WAVE, AND
TRIANGULATION
IS ESTABLISHED? — S2 → NO

↓ YES — S3

SPECIFY POSITION OF
OBJECT BY TRIANGULATION
(PROBE WAVE
DETECTION PROCESSING)

↓

[ ]

↓

END

# FIG. 9

```
┌─────────────────────────┐
│         START           │
│    (PREDETERMINED        │
│   EXECUTION INTERVAL)    │
└─────────────────────────┘
             │
             ▼
┌─────────────────────────┐
│      EACH CAMERA         │
└─────────────────────────┘
             │         ┌─ S5
             ▼
┌─────────────────────────┐
│        ACQUIRE          │
│    CAPTURED IMAGES      │
└─────────────────────────┘
             │         ┌─ S6
             ▼
┌─────────────────────────┐
│   IMAGE RECOGNITION      │
│      PROCESSING          │
└─────────────────────────┘
             │         ┌─ S7
             ▼
┌─────────────────────────┐
│ SPECIFY POSITION AND TYPE│
│ OF OBJECT BASED ON IMAGE │
│ RECOGNITION RESULT (IMAGE│
│  DETECTION PROCESSING)   │
└─────────────────────────┘
             │
             ▼
┌─────────────────────────┐
│                         │
└─────────────────────────┘
             │
             ▼
┌─────────────────────────┐
│          END            │
└─────────────────────────┘
```

# FIG. 10

START

S11
ACQUIRE LATEST DETECTION RESULT OF PROBE WAVE DETECTION PROCESSING AND LATEST DETECTION RESULT OF IMAGE DETECTION PROCESSING

S12
IMAGE IS DETECTED? — NO

YES

S13
PEDESTRIAN? — NO

YES

S14
DISPOSE PEDESTRIAN VEHICLE-OCCUPIED AREA

S17
DISPOSE REFERENCE VEHICLE-OCCUPIED AREA

S15
PLOT POSITION OF OBJECT

S18
PLOT POSITION OF OBJECT

S16
CALCULATE COLLISION LINEAR DISTANCE FROM PEDESTRIAN VEHICLE-OCCUPIED AREA TO POSITION OF OBJECT

S19
CALCULATE COLLISION LINEAR DISTANCE FROM REFERENCE VEHICLE-OCCUPIED AREA TO POSITION OF OBJECT

S20
DETECTION BY PROBE WAVE? — NO

YES

S21
DISPOSE REFERENCE VEHICLE-OCCUPIED AREA

S22
PLOT POSITION OF OBJECT

S23
CALCULATE COLLISION LINEAR DISTANCE FROM REFERENCE VEHICLE-OCCUPIED AREA TO POSITION OF OBJECT

S24
SAME-OBJECT DETERMINATION PROCESSING

S25
SAME-OBJECT DETERMINATION IS ESTABLISHED? — NO

YES

S26
PEDESTRIAN? — NO

YES

S27
DISPOSE PEDESTRIAN VEHICLE-OCCUPIED AREA, AND CALCULATE DIFFERENCE BETWEEN REFERENCE VEHICLE-OCCUPIED AREA AND PEDESTRIAN VEHICLE-OCCUPIED AREA

S28
CORRECT COLLISION LINEAR DISTANCE

S29
COLLISION LINEAR DISTANCE IS EQUAL TO OR LESS THAN PREDETERMINED DISTANCE? — NO

YES

S30
ASSISTANCE FOR OBJECT

S31
ACC POWER SUPPLY IS TURNED OFF? — NO

YES

END

25

## FIG. 11

P
● (X,Y)

L1

45                42

y

x

## FIG. 12

P
● (X,Y)

L1

45                41

y

x

# FIG. 13

*SAME-OBJECT DETERMINATION
ESTABLISHMENT CONDITION
·$|X1 - X2| \leq$ FIRST PREDETERMINED VALUE
and
·$|Y1 - Y2| \leq$ SECOND PREDETERMINED VALUE

51

P2(X2,Y2)  P1(X1,Y1)

y
x

9B  9C  2

6

9A  9D

## FIG. 14

# FIG. 15

RELATED ART

51

LONG

41

DISTANCE TO PEDESTRIAN IS LARGER THAN PREDETERMINED
DISTANCE ⇒ ASSISTANCE CANNOT BE STARTED

EMBODIMENT

51

SHORT

42

DISTANCE TO PEDESTRIAN IS EQUAL TO OR LESS THAN
PREDETERMINED DISTANCE ⇒ ASSISTANCE CAN BE STARTED

# FIG. 16

101    101

SHORT

LONG

100

# FIG. 17

101

LONG

100

DISTANCE TO PEDESTRIAN IS LARGER THAN
THRESHOLD ⇒ ASSISTANCE CANNOT BE STARTED

101

SHORT

100

DISTANCE TO PEDESTRIAN IS LESS THAN
THRESHOLD ⇒ ASSISTANCE IS STARTED

**EUROPEAN SEARCH REPORT**

Europäisches
Patentamt
European
Patent Office
Office européen
des brevets

Application Number

EP 25 21 4200

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/120759 A1 (ZF CV SYSTEMS GLOBAL GMBH [CH]) 13 June 2024 (2024-06-13) | 1-3 | INV.<br>B60W30/09 |
| A | * the whole document * | 4 | |
| X | DE 10 2023 111404 A1 (CARIAD SE [DE]) 7 November 2024 (2024-11-07) * paragraphs [0011], [0018], [0020], [0022] - [0025], [0028], [0029], [0057], [0060], [0061], [0065], [0066]; figure 3 * | 1-4 | |
| X | US 2018/304887 A1 (NORDBRUCH STEFAN [DE]) 25 October 2018 (2018-10-25) * paragraphs [0012] - [0017], [0032], [0033], [0056] - [0060], [0124] - [0129]; figure 5 * | 1-3 | |

TECHNICAL FIELDS
SEARCHED      (IPC)

B60W

The present search report has been drawn up for all claims

| Place of search | Date of completion of the search | Examiner |
|---|---|---|
| Munich | 8 April 2026 | Elbel, Benedikte |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 21 4200

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | Publication date | Patent family member(s) | Publication date |
|---|---|---|---|
| WO 2024120759 A1 | 13-06-2024 | NONE | |
| DE 102023111404 A1 | 07-11-2024 | NONE | |
| US 2018304887 A1 | 25-10-2018 | CN 108140326 A | 08-06-2018 |
| | | DE 102015220640 A1 | 27-04-2017 |
| | | EP 3365879 A1 | 29-08-2018 |
| | | JP 2018537761 A | 20-12-2018 |
| | | US 2018304887 A1 | 25-10-2018 |
| | | WO 2017067786 A1 | 27-04-2017 |

EPO FORM P0459

For more details about this annex : see Official Journal of the European Patent Office, No. 12/82

**EP 4 763 643 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007365 A